# EUROPEAN PATENT APPLICATION

(11) **EP 0 562 773 A1**
(43) Date of publication of application: **29.09.1993**
(21) Application number: 93302076.0
(22) Date of filing: 18.03.1993
(51) Int. Cl.: C09K 3/18

(54) **De-icer/anti-icer**

(30) Priority: 23.03.1992 GB 9206263
(71) Applicant: FERNOX MANUFACTURING CO., LTD., Clavering, Essex CB11 4QZ (GB)
(72) Inventor: Stainer, Philip John, The Cottage on the Green, Haverhill, Suffolk, CB9 7HD (GB)
(74) Representative: Allard, Susan Joyce

(57) **Abstract**

The invention relates to a composition which has de-icing and/or anti-icing properties. In particular, it relates to such a composition which is suitable inter alia on aircraft. The composition is thixotropic and comprises one or more glycols, water and a thickener characterised in that the thickener comprises a succinoglucan thickener.

## Description

The present invention relates to a composition which has de-icing and/or anti-icing properties. In particular, it relates to such a composition which is suitable for use inter alia on aircraft.

Aircraft can be exposed to very cold conditions when parked on the ground or waiting for take off and the temperature is often cold enough to freeze water. It is very important to ensure that an aircraft does not become covered in ice from frozen water vapour under such conditions as this will increase the weight of the aircraft and make take off more difficult and may cause the engines to ice up. If a fan jet such as the RB 211 engine does ice up it is necessary to blow hot air into that engine in order to defrost it. The engine may then be started and, once it is running, it will warm up preventing refreezing. Also, the design of a fan jet is usually such that it will divert hot exhaust gases over various parts of the aircraft to prevent those parts from icing. However, because of the problem of freezing it has in the past been necessary in cold weather to keep the engines running, even if the stop is for several hours, so as to prevent icing up of the engines, unless de-icing blowers are available.

Another technique which has been employed to reduce the problem of icing is the use of de-icing and/or anti-icing compositions. Such compositions are usually provided in a thixotropic form that is a form which is fluid under stress but when un-stressed has a thicker composition. Such compositions can be sprayed onto aircraft because the stress involved in spraying renders them fluid. On reaching the aircraft body the stress decreases and so the composition will thicken and cling to the body remaining there while the aircraft remains stationary. Then, as the aircraft moves for take off the body is stressed and the composition becomes fluid again so that it runs off as the aircraft takes off and commences its flight. This has the advantage of reducing the weight on the aircraft body during flight.

Such compositions have in the past consisted of a mixture of glycol and water together with a thickener which causes the mixture to be thixotropic. In the past, ethylene glycol was commonly used as the glycol component. However, this is toxic and so the preference now is to use propylene glycol. Such compositions will also usually contain inhibitors to prevent corrosion of metals used in the construction of aircraft.

Conventional thickeners which have been used in such compositions include Carbopol which is a polyacrylate. More recently, cellulose based thickeners and other polysaccharides have been considered.

There are, however, various drawbacks associated with known de-icing/anti-icing compositions. For example, they may decompose in contact with hot engines to produce toxic or corrosive compounds, or may require a fairly large stress and energy input to render them fluid and sprayable. There remains a need for new formulations with improved properties.

Thus, in accordance with the present invention there is provided a de-icer and/or anti-icer which is thixotropic and comprises one or more glycols, water and a thickener characterised in that the thickener comprises a succinoglucan thickener.

By the term "thixotropic" used herein is meant a compound which is a gel or thick liquid when unstressed and which when stressed becomes more fluid. Liquids and gels which exhibit a particular extreme form of thixotropy are known as "pseudoplastic".

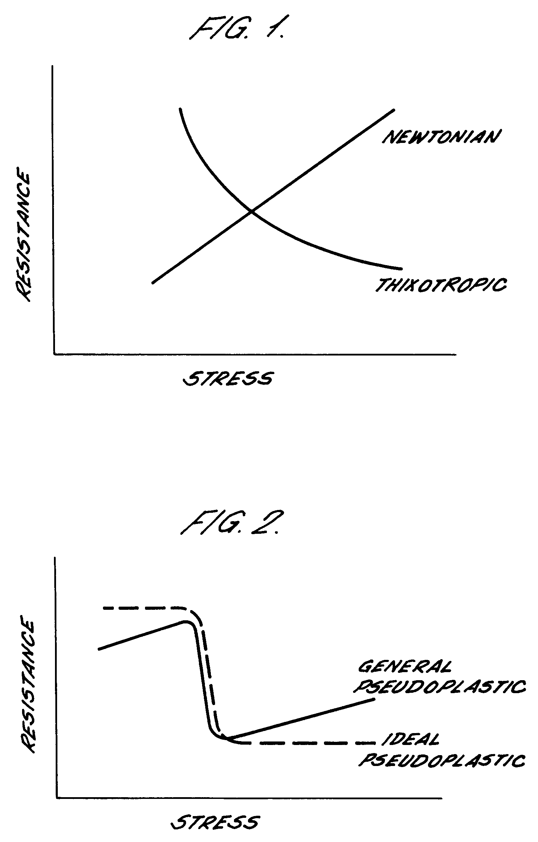

These properties are illustrated in figures 1 and 2 of the accompanying drawings.

Referring to the drawings:
Figure 1 is a plot of resistance to applied stress showing typical curves for Newtonian and thixotropic fluids,
Figure 2 is a plot showing resistance to applied stress for an ideal pseudoplastic fluid and a more typical pseudoplastic fluid.

As shown in Figure 1, for a conventional Newtonian fluid the shear resistance, as measured by the amount of energy needed to cause the shear, increases as the applied stress is increased. On the other hand for a thixotropic material the resistance decreases as stress increases. Figure 2 shows a typical curve for an ideal pseudoplastic material. In this case the resistance to shear remains constant at low stresses and then drops dramatically as the stress increases and reaches a critical point. After the large drop the resistance remains low and constant with further application of stress. In the case of a less ideal pseudoplastic material the material may behave initially in a Newtonian manner and then drop pseudoplastically as a particular critical level of stress is reached, then with further increase in stress the resistance may again increase in a Newtonian manner after the pseudoplastic drop.

De-icers according to the invention have the desired properties of thixotropy and, in particular may be pseudoplastic in the temperature range of interest for example, in the temperature range 0 to 20°C they conform with ASTM D2196.

While the addition of various different glycols to water will produce a de-icing effect such as ethylene glycol and butyl glycol as well as mono-, di-and triproylene glycols, it is preferred to use propylene glycol, particularly 1,2 propylene glycol in the present invention because ethylene glycol is known to be toxic while butyl glycol is more expensive.

A preferred example of a succinoglucan thickener which may be used in the present invention is the compound with the CAS registry number 9014-37-3 which provides the active ingredient in the chemical formulation sold by Shell Chemicals under the name Shellflo S. The amount of succinoglucan thickener to be used in the de-icer and/or anti-icer of the present invention is typically 0.05 to 1.0% by weight.

Conveniently, the de-icer and/or anti-icer may further comprise a detergent which will have the effect of breaking down grease which helps to keep the aircraft clean and assist in de-icing/anti-icing.

In a preferred embodiment of the invention the thickener is provided by Shellflo S marketed by Shell Chemicals. This formulation includes 1,2-benzisothiazolin-3-one as a biocide. Preferably the de-icer will contain 0.5% to 10% Shellflo S. The Shellflo S itself contains about 8% thickener and so this corresponds to an approximate thickener content of 0.05 to 1.0% by weight.

It is also important for aircraft applications that the de-icer and/or anti-icer should not lead to corrosion of metal surfaces with which it is in contact but instead should inhibit corrosion of those surfaces. Thus, it preferably further comprises an inhibitor to reduce or prevent corrosion of metal such as iron, steel, aluminium, copper, magnesium and titanium. Examples of inhibitor compounds which may be employed in the de-icer of the invention are magnesium and zinc salts, phosphates, borates, silicates, nitrites, nitrates, chromates, molybdates, permanganates, iodates and iodides, fluorides including boron trifluoride, aniline, aromatic amines such as diphenylamine and dibenzyl aniline, guanidine, nitrobenzene, triazoles such as benzotriazole and tolyltriazole, benzoic acid, benzophenones, organo-sulphur derivatives such as mercaptobenzothiazole, dithiocarbamide and diphenyl sulphoxide, linear amines such as oleyl amine and amine oxides, oxygenated amines such as mono-, di- and triethanelamine, soaps of fatty acids such as sebacic acid, oleic acid, stearic acid and linoleic acid, imidazolines with fatty chains such as oleyl imidazoline, sarcosinates, taurates, betaines, furfural, formaldehyde glucose and ascorbic acid.

A typical formulation for a de-icer and/or anti-icer according to the invention is 40 to 60% water, 40 to 60% propylene glycol, 3 to 8% inhibitor and 0.05 to 1% succinoglucan thickener.

One problem which has been associated with commercial anti-icer/de-icers is that they decompose on heating to yield corrosive materials such as caustic soda, phosphates and even phosphoric acid. The de-icer of the present invention has the advantage that on decomposition it yields only carbon dioxide and water and so is fairly harmless. It can therefore be sprayed directly into a jet engine thus avoiding the need to cover all engine air intakes prior to spraying.

The present invention includes use of a de-icer and/or anti-icer as described above to prevent freezing on the body or engine of an aircraft.

The invention is illustrated by the following Example.

### Example

The following components were mixed to produce a composition with de-icing and anti-icing properties:
- Water (demineralised): 41 weight %
- Monopropylene glycol: 50 weight %
- Shellflo S: 3 weight %
- Inhibitor components: 6 weight %

Shellflo S contains approximately 8 weight % succinoglucan thickener and so the level of thickener in the formulation is about 0.24 weight %.

The product was then tested for its rheological properties, corrosion inhibiting properties and de-icing abilities.

The product was tested on a Brookfield viscometer and was found to exhibit non-Newtonian flow in the range -20 to +20°C. The behaviour was pseudoplastic in the range 0 to 20°C in accordance with ASTM D2196.

The product was tested for coupon corrosion in accordance with ASTM 483 and was found to conform with this standard for the corrosion of aluminium alloys, magnesium alloys, titanium alloys, galvanised iron steel and carbon steel.

The product was tested for its anti/de-icing properties and was found to accord with the requirements of the Association of European Airlines, that is:
- de-icing:: it removed frozen deposits of frost and ice from the exterior surface of a parked aircraft
- anti-icing:: it provided protection against re-freezing for up to eight hours.

The product was tested under heat conditions similar to those experienced within an RB211 engine to check for decomposition products. No toxic products were detected and the main decomposition products were carbon dioxide and water.

## Claims

1. A de-icer and/or anti-icer which is thixotropic and comprises one or more glycols, water and a thickener characterised in that the thickener comprises a succinoglucan thickener.

2. A de-icer and/or anti-icer as claimed in claim 1 characterised in that the one or more glycols comprise propylene glycol.

3. A de-icer and/or anti-icer as claimed in claim 1 or claim 2 characterised in that the succinoglucan thickener is present in an amount of 0.005 to 0.1% by weight.

4. A de-icer and/or anti-icer as claimed in any one of claims 1 to 3 characterised in that the thickener is provided by 0.5% to 10% Shellflo S.

5. A de-icer and/or anti-icer as claimed in any one of claims 1 to 4 characterised in that it further includes an inhibitor to reduce or prevent corrosion of metal.

6. A de-icer and/or anti-icer as claimed in claim 5 characterised in that the inhibitor is effective to reduce or prevent corrosion of iron, steel, aluminium, copper, magnesium and titanium.

7. A de-icer and/or anti-icer as claimed in claim 5 or claim 6 characterised in that it comprises 40 to 60% water, 40 to 60% propylene glycol, 3 to 8% inhibitor and 0.005 to 0.1% succinoglucan thickener.

8. Use of a de-icer and/or anti-icer as claimed in any one of claims 1 to 7 to prevent freezing on the body or engine of an aircraft.
